# FASCICULE DE BREVET EUROPEEN

(11) **EP 4 046 273 B1**
(45) Date de publication et mention de la délivrance du brevet: **09.08.2023**
(21) Numéro de dépôt: 20804324.0
(22) Date de dépôt: 16.10.2020
(51) Int. Cl.: H02S 40/42, H02S 40/44, F16L 41/12, F24S 10/00

(54) **INSTALLATION COMPORTANT UNE CONNECTIQUE POUR LE RACCORDEMENT FLUIDIQUE D'UN ECHANGEUR THERMIQUE D'AU MOINS UN PANNEAU SOLAIRE HYBRIDE**
ANLAGE MIT EINEM VERBINDER ZUR FLUIDVERBINDUNG EINES WÄRMETAUSCHERS VON MINDESTENS EINEM HYBRIDEN SOLARPANEEL
INSTALLATION COMPRISING A CONNECTOR FOR THE FLUID CONNECTION OF A HEAT EXCHANGER OF AT LEAST ONE HYBRID SOLAR PANEL

(30) Priorité: 17.10.2019 FR 1911629
(43) Date de publication de la demande: 24.08.2022
(73) Titulaire: Dualsun, 13453 Marseille Cedex (FR)
(72) Inventeur: BROTTIER, Laetitia, 16380 Chazelles (FR); MOUTERDE, Jérôme, 13013 Marseille (FR)
(74) Mandataire: Roman, Alexis
(86) Numéro de dépôt international: PCT/FR2020/051861
(87) Numéro de publication internationale: WO 2021/074549

(56) Documents cités:
- WO-A1-2019/110884
- FR-A1- 2 244 117
- US-A1- 2011 192 393

## Description

### Domaine technique.

L'invention a pour objet une installation comportant une connectique pour le raccordement fluidique d'un échangeur thermique d'au moins un panneau solaire hybride.

Elle concerne le domaine technique des raccords pour panneaux solaires hybrides.

### Etat de la technique.

Les panneaux solaires photovoltaïques permettent de produire une énergie électrique à partir du rayonnement solaire. Ils comprennent une pluralité d'éléments photovoltaïques (cellules ou couches minces) qui fonctionnent selon le principe de l'effet photoélectrique. Généralement, plusieurs éléments photovoltaïques sont reliés entre eux sur un panneau solaire photovoltaïque, et plusieurs panneaux sont reliés pour créer une installation solaire. Cette installation produit de l'électricité qui peut être consommée sur place ou alimenter un réseau de distribution.

Les panneaux solaires photovoltaïques ne convertissent qu'une faible part du rayonnement solaire en électricité, le reste étant de la chaleur non utilisée. Cette chaleur est défavorable à la performance électrique des panneaux solaires puisqu'on peut constater une diminution de l'efficacité des éléments photovoltaïques avec la température d'environ -0.45%/°C. C'est pourquoi il est doublement intéressant de refroidir les panneaux solaires photovoltaïques. En effet, non seulement l'efficacité des éléments photovoltaïques croît, mais les calories du refroidissement peuvent être utilisées dans des systèmes de chauffage plus ou moins complexes. On parle alors de panneaux solaires hybrides capables de produire simultanément une énergie électrique et une énergie thermique.

Les documents brevets WO 2012/069750 (SOLAIRE 2G), WO 2016/156764 (SOLAIRE 2G) et WO 2017/162993 (SOLAIRE 2G) décrivent des panneaux solaires hybrides dans lesquels un échangeur thermique est disposé en vis-à-vis de la face arrière du module photovoltaïque. Un fluide de refroidissement circule dans l'échangeur pour récupérer les calories et refroidir le module photovoltaïque. Des connecteurs, intégrés ou rapportés sur les collecteurs de l'échangeur, permettant de connecter ce dernier à un circuit d'alimentation ou de décharge d'un fluide de refroidissement.

Lorsque deux panneaux solaires hybrides sont placés l'un à côté de l'autre, leur échangeur thermique respectif est connecté à un tuyau d'alimentation du fluide de refroidissement et à un tuyau de décharge dudit fluide, au moyen de connectiques adaptées du type à raccords soudés, raccords annelés, raccords filetés, ou encore des raccords dit « olives ». Les documents brevets suivants divulguent des exemples de telles connectiques : WO2016199408 (SHARP) EP2444704 (ROTH), EP2397739 (TIEMME RACCORDERIE), EP2420714 (WITZENMANN), EP2310733 (FAKRO), EP2195584 (SENIOR BERGHOEFER), EP1788321 (BOSCH), EP0964212 (FAFCO).

Les connectiques décrites dans ces documents brevets sont relativement complexes à mettre en oeuvre et onéreuses. De plus, de par la conception même des raccords, on constate des pertes de charge importantes dues notamment à une multitude de coudes des tuyaux d'alimentation ou de décharge du fluide de refroidissement. En outre, l'encombrement des connectiques peut être relativement important, ce qui rend difficile leur installation, notamment sur le côté des panneaux, dans la mesure où dans des installations de panneaux solaires hybrides, la distance entre deux panneaux adjacents est généralement inférieure ou égale à 20 mm. Leur encombrement relativement important est également problématique dans la mesure où dans une installation photovoltaïque classique, la distance entre les panneaux et leur support (par exemple une toiture) est généralement réduite.

Le document brevet WO 2019/110884 (DUALSUN) décrit une connectique comprenant : un corps tubulaire installé autour d'un tuyau dans lequel s'écoule le liquide de refroidissement, et un tube installé sur une face externe dudit corps tubulaire et qui assure une communication fluidique entre ledit tuyau et l'échangeur thermique du panneau. Ce tube comprend une portion distale qui est en prise avec la paroi du tuyau de façon à bloquer la rotation axiale et le déplacement axial dudit tuyau par rapport au corps tubulaire. La portion proximale du tube s'insère de manière étanche et démontable dans un raccord rapide installé au niveau de la zone d'arrivée et/ou d'évacuation de l'échangeur thermique. Cette solution « plug-and-play » (ou « brancher-et-utiliser » en français) assure un montage très rapide. Le corps tubulaire est en outre bloqué en position par rapport à l'échangeur thermique au moyen d'un ou plusieurs éléments de blocage en prise avec la paroi de l'échangeur.

En pratique, une paroi inférieure de l'échangeur présente une portion tubulaire dans laquelle est installé le raccord rapide. Cette portion tubulaire et le raccord rapide sont situés dans la zone d'arrivée et/ou d'évacuation de l'échangeur. Cette portion tubulaire fait saillie de la paroi externe de l'échangeur sans dépasser le cadre du panneau. En pratique, ce non-dépassement se vérifie lorsque la hauteur du cadre est relativement importante, notamment d'environ 45 mm, cette hauteur permettant d'absorber la longueur de la portion tubulaire.

La tendance étant d'optimiser la compacité des panneaux, de nouveaux cadres ont aujourd'hui des hauteurs réduites, notamment inférieures à 45 mm, et pouvant même être inférieures ou égales à 30 mm. La connectique décrite dans le document brevet WO 2019/110884 ne convient pas à ces nouveaux cadres, dans la mesure où la portion tubulaire dans laquelle est installé le raccord rapide dépasserait hors du cadre. En effet, dans une installation photovoltaïque classique, la distance entre les panneaux et leur support (par exemple des rails fixés sur une toiture) est généralement réduite. Le dépassement de la portion tubulaire hors du cadre ne permet donc pas d'installer le panneau sur son support, sauf à prévoir une solution de montage complexe. De plus, ce dépassement induit des difficultés de conditionnement, les panneaux ne pouvant pas être empilés face contre face. Il est là aussi nécessaire de prévoir des solutions de conditionnement plus complexes et plus encombrantes.

En outre, lorsque la portion proximale du tube est insérée dans le raccord rapide, son extrémité pénètre dans l'échangeur thermique. Pour limiter les pertes de charge à l'intérieur de l'échangeur, cette extrémité ne doit pas être « collée » à la paroi supérieure de l'échangeur, mais au contraire suffisamment espacée de celle-ci pour que le fluide puisse s'écouler le plus librement possible hors ou dans le tube. Cette contrainte implique, en pratique, d'employer des échangeurs relativement haut, accentuant leur dépassement hors des nouveaux cadres.

La demanderesse a en outre constaté que, en usage, la connectique décrite dans le document brevet WO 2019/110884, pouvait avoir tendance à fuir. Ce problème d'étanchéité apparaît notamment lorsque la portion proximale du tube n'est pas correctement positionnée dans le raccord rapide. En pratique, ce mauvais positionnement peut provenir d'un maintien en position de la connectique qui n'est pas suffisamment efficace et/ou robuste au regard des contraintes mécaniques auxquelles elle est soumise.

L'invention vise à pallier les problèmes techniques précités. Un autre objectif de l'invention est de proposer une connectique à montage rapide, dont la conception n'induit pas un dépassement d'une paroi de l'échangeur thermique hors du cadre, même lorsque ledit cadre a une hauteur réduite.
Un objectif subsidiaire de l'invention est de proposer une connectique dont l'étanchéité est améliorée par rapport aux connectiques précitées de l'art antérieur.
Un autre objectif subsidiaire de l'invention est de proposer une connectique dont la conception est simple, robuste et facile à installer.

### Présentation de l'invention.

La solution proposée par l'invention est une installation comprenant : un tuyau assurant l'alimentation ou la décharge d'un fluide de refroidissement, - au moins un panneau solaire hybride, ledit panneau comprenant :
-- un module photovoltaïque,
-- un échangeur thermique dans lequel s'écoule un fluide de refroidissement,

- une connectique connectant l'échangeur thermique au tuyau, ladite connectique comprenant :
   -- un corps tubulaire installé autour du tuyau,
   -- un tube installé sur une paroi externe du corps tubulaire et qui assure une communication fluidique entre le tuyau et l'échangeur thermique, lequel tube et laquelle paroi externe forment une pièce monobloc,
- l'échangeur thermique présente une paroi dans laquelle est aménagé un trou, le tube s'emmanchant librement dans ledit trou, ledit tube et ledit trou étant dépourvus d'éléments de fixation les maintenant en position,
- le tube est pourvu d'un joint d'étanchéité assurant une étanchéité fluidique entre ledit tube et le trou,
- le joint d'étanchéité se présente sous la forme d'un manchon qui s'emmanche sur la paroi externe du tube,
- le corps tubulaire est assemblé sur l'échangeur thermique au moyen d'organes configurés pour réaliser un emboîtage élastique dudit corps sur ledit échangeur, lesquels organes sont distincts du manchon, du tube et du trou, lesquels organes assurent le maintien en position dudit corps sur ledit échangeur.

Le tube ne s'insère plus dans un raccord rapide, comme décrit dans le document brevet WO 2019/110884, mais dans un simple trou réalisé dans une paroi de l'échangeur. La paroi externe de l'échangeur peut ainsi être plane, sans avoir à prévoir une portion tubulaire où loger un raccord rapide. L'échangeur est de fait particulièrement compact, avec une hauteur réduite par rapport à celle de l'échangeur du document brevet WO 2019/110884. Cet échangeur ne dépasse pas du cadre du panneau, même lorsque ledit cadre a une hauteur plus réduite. De plus, dans la connectique selon l'invention, la fonction « *étanchéité »* est dissociée de la fonction « *maintien en position* ». L'étanchéité entre la connectique et l'échangeur est simplement assurée par la coopération du joint d'étanchéité avec le trou dudit échangeur. Le maintien en position est quant à lui assuré par un emboîtage élastique distinct. Cette dissociation des fonctions permet d'obtenir une connectique robuste et compacte, assurant une étanchéité optimale avec l'échangeur, même lorsque le fluide de refroidissement est sous pression et/ou que ladite connectique est sollicitée mécaniquement. En outre, cette solution particulièrement simple à mettre en oeuvre, permet une mise en place très simple et très rapide de la connectique.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Selon un mode de réalisation : l'emboîtage élastique est réalisé au moyen d'organes d'encliquetage aménagés sur le corps tubulaire, lesquels organes d'encliquetage coopèrent avec des organes d'encliquetage complémentaires aménagés sur l'échangeur thermique.
- Selon un mode de réalisation : - les organes d'encliquetage du corps tubulaire se présentent sous la forme de pattes flexibles qui s'étendent, depuis la surface externe dudit corps, parallèlement au tube et du même côté que ledit tube ; - chaque patte comprend une extrémité solidaire du corps tubulaire et une extrémité libre pourvue d'un élément d'encliquetage ; - chaque élément d'encliquetage coopère avec un trou d'encliquetage aménagé sur l'échangeur thermique.
- Selon un mode de réalisation : le corps tubulaire est pourvu de deux paires de pattes, les pattes de chaque paire étant disposées en miroir, symétriquement par rapport au plan médian dudit corps.
- Selon une variante de réalisation : le corps tubulaire est pourvu de deux paires de pattes, les pattes de chaque paire étant disposées en miroir, symétriquement par rapport au plan sécant dudit corps.
- Selon un mode de réalisation : chaque trou d'encliquetage est aménagé dans une goulotte réalisée dans une paroi l'échangeur thermique, lesquelles goulottes forment des guides pour les pattes lors de l'emboîtage du corps tubulaire sur la paroi dudit échangeur.
- Selon un mode de réalisation : un ou plusieurs ergots sont aménagés sur le corps tubulaire, lesquels ergots s'insèrent dans des logements complémentaires aménagés sur l'échangeur, lesquels ergots sont distincts des organes d'encliquetage.
- Selon un mode de réalisation : une ou plusieurs nervures sont aménagées sur le corps tubulaire, lesquelles nervures s'insèrent dans des logements complémentaires aménagés sur l'échangeur, lesquelles nervures sont distinctes des organes d'encliquetage.
- Selon un mode de réalisation : les nervures sont disposées symétriquement par rapport au plan sécant du corps tubulaire.
- Selon une variante de réalisation : les nervures sont disposées symétriquement par rapport au plan médian du corps tubulaire.
- Selon un mode de réalisation : des griffes ou picots sont aménagés sur la paroi interne du corps tubulaire.
- Selon un mode de réalisation : - le manchon a une paroi externe conique ; - le trou présente la même conicité que le manchon, la paroi interne dudit trou étant ajustée à la paroi externe dudit manchon.
- Selon un mode de réalisation : la paroi extérieure du manchon est pourvue d'un ou plusieurs bourrelets ou nervures circulaires, faisant saillie de ladite paroi extérieure.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] schématise une installation selon un mode de réalisation de l'invention,
[Fig. 2] schématise une coupe longitudinale d'une connectique utilisée dans une installation conforme à l'invention,
[Fig. 3] schématise une coupe transversale d'une connectique utilisée dans une installation conforme à l'invention,
[Fig. 4] illustre un mode de réalisation préféré de l'emmanchement du tube du corps tubulaire dans le trou de la paroi de l'échangeur.
[Fig. 5] est une vue en perspective de dessus d'une demi-coquille d'un corps tubulaire utilisé dans une installation conforme à l'invention,
[Fig. 6] est une vue en perspective de dessus d'une demi-coquille d'un corps tubulaire utilisé dans une installation conforme à l'invention, selon une variante de réalisation,
[Fig. 7] est une vue en perspective de dessous de la demi-coquille de la figure 5,

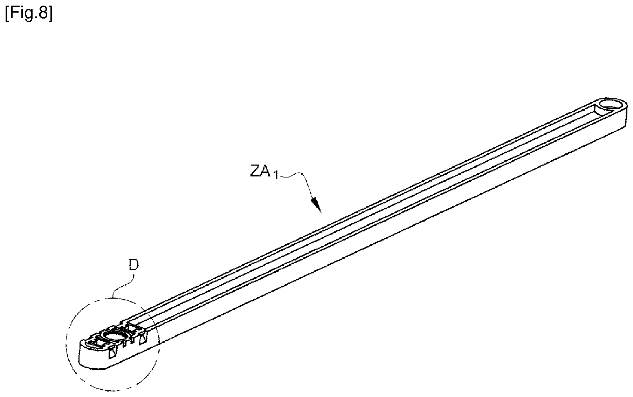

[Fig. 8] est une vue en perspective d'une zone d'arrivée ou de décharge d'un échangeur thermique,
[Fig. 9] est une vue agrandie du détail D de la figure 10,
[Fig. 10] montre, en perspective éclatée, le corps d'une connectique installé autour d'un tuyau d'alimentation ou de décharge d'un fluide de refroidissement, un joint d'étanchéité et une zone d'arrivée ou de décharge d'un échangeur thermique,
[Fig. 11] montre les éléments de la figure 10 avec le joint d'étanchéité emmanché sur le tube du corps tubulaire,
[Fig. 12] montre la connectique de la figure 11 connectée à la zone d'arrivée ou de décharge de l'échangeur thermique,
[Fig. 13] illustre des étapes d'un procédé de montage d'une installation conforme à l'invention.

### Description des modes de réalisation.

Par souci de clarté, il est précisé que les termes « tubulaire » et « tube » s'entendent au sens de la présente invention comme couvrant des pièces creuses cylindriques dont la section (ou courbe directrice) est préférentiellement circulaire, mais qui peut également avoir une section d'une autre forme telle que : ellipse, carré, rectangle, etc.
Encore par souci de clarté, on entend par « *portion proximale* », la portion du tube qui est la plus proche de l'échangeur (ou la plus éloignée du tuyau), et par « *portion distale »,* la portion du tube qui est la plus éloignée de l'échangeur (ou la plus proche du tuyau).
*« Emboîtage élastique»* peut être compris de façon non limitative comme encliquetage, assemblage par clip, et couvre de manière générale tout mode d'assemblage où des éléments sont déformés lors de l'introduction. Après assemblage, les éléments ne peuvent plus être séparés de manière intempestive. Un jeu entre les éléments peut toutefois exister une fois assemblés.
Tel qu'utilisé ici, sauf indication contraire, l'utilisation des adjectifs ordinaux «*premier*»*,* «*deuxième*»*,* etc., pour décrire un objet indique simplement que différentes occurrences d'objets similaires sont mentionnées et n'implique pas que les objets ainsi décrits doivent être dans une séquence donnée, que ce soit dans le temps, dans l'espace, dans un classement ou de toute autre manière.

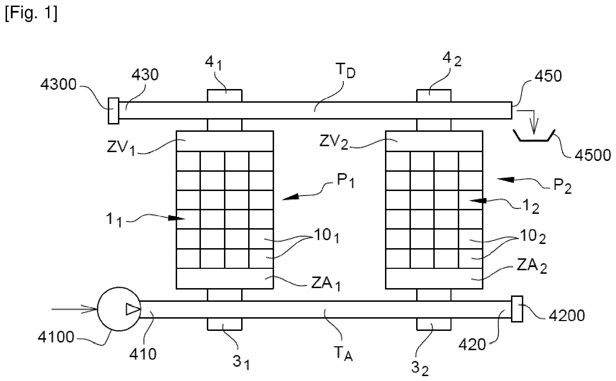

Sur la figure 1, l'installation comprend un premier panneau solaire hybride P₁ et un second panneau solaire hybride P₂ placés l'un à côté de l'autre. L'installation peut bien évidemment présenter plus de panneaux (par exemple jusqu'à une centaine) ou un seul panneau. Ces panneaux sont par exemple du type décrit dans les documents brevets WO 2012/069750 et WO 2016/156764 auquel l'homme du métier pourra se référer en cas de besoin. Les énergies électriques et thermiques qu'ils produisent sont exploitables par une habitation ou une installation, par exemple pour chauffer une piscine.

Chaque panneau P₁, P₂ comprend un module photovoltaïque 1₁, 1₂ présentant une face avant et une face arrière. La face avant est laissée libre de façon à ce qu'elle puisse recevoir le rayonnement solaire. Chaque module photovoltaïque 1₁, 1₂ comporte au moins un, et avantageusement plusieurs éléments photovoltaïques 10₁, 10₂ placés dans un même plan. Ces éléments photovoltaïques sont reliés électriquement entre eux, en série ou en parallèle, et sont préférentiellement encapsulés, par exemple dans un polymère thermoplastique tel que l'éthylène acétate de vinyle (EVA) ou le silicone. La face avant du module photovoltaïque exposée au rayonnement est avantageusement recouverte d'une plaque transparente, par exemple une plaque de verre, protégeant les éléments photovoltaïques 10₁, 10₂.

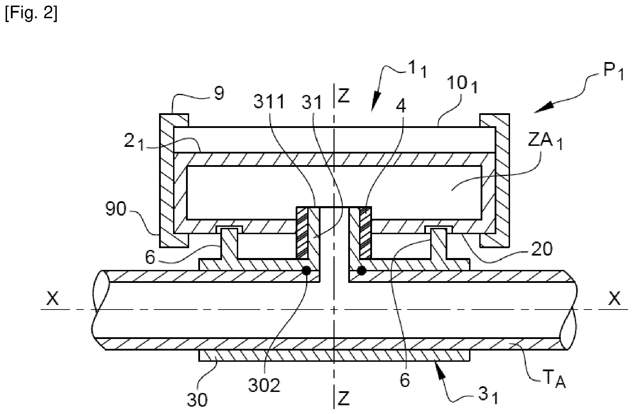

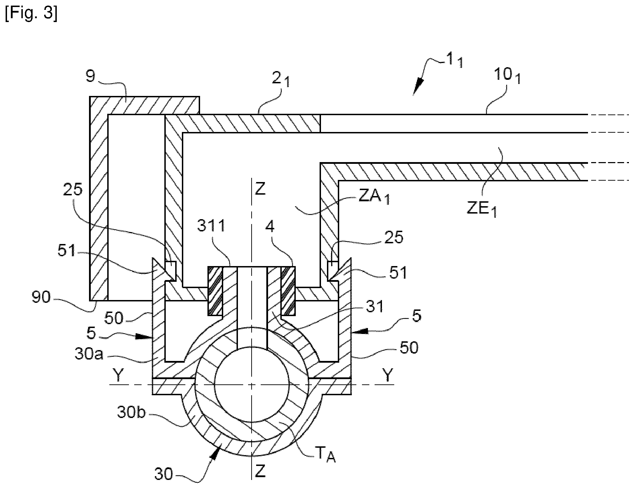

Sur les figures 2 et 3, un échangeur thermique 2₁, 2₂, dans lequel s'écoule un fluide de refroidissement, est placé en vis-à-vis de la face arrière de chaque module photovoltaïque 1₁, 1₂ pour récupérer la chaleur accumulée ou dissipée dans ledit module. En se rapportant à la figure 1, chaque échangeur 2₁, 2₂ comporte trois zones principales : une zone d'arrivée ZA₁, ZA₂ du fluide de refroidissement, une zone d'échange thermique ZE₁, ZE₂ située sous les éléments photovoltaïques 10₁, 10₂ et une zone d'évacuation ZV₁, ZV₂ dudit fluide. Le module photovoltaïque 1₁, 1₂ peut aussi se trouver au moins partiellement au-dessus des zones d'arrivée ZA₁, ZA₂ et/ou d'évacuation ZV₁, ZV₂. La zone d'échange ZE₁, ZE₂ peut par exemple représenter de 10% à 100% de la surface du module photovoltaïque 1₁, 1₂.

Dans l'installation de la figure 1, un seul et même tuyau T_{A} continu alimente en fluide de refroidissement l'échangeur thermique 2₁ du premier panneau P₁ et l'échangeur thermique 2₂ du second panneau P₂. Et un seul et même tuyau T_{D} décharge le fluide de refroidissement de l'échangeur thermique 2₁ du premier panneau P₁ et de l'échangeur thermique 2₂ du second panneau P₂.

Plus particulièrement, une première connectique d'entrée 3₁ permet de connecter le tuyau d'alimentation T_{A} à la zone d'arrivée ZA₁ du premier échangeur 2₁ ; une seconde connectique d'entrée 3₂ permet de connecter le tuyau d'alimentation T_{A} à la zone d'arrivée ZA₂ du second échangeur 2₂ ; une première connectique de sortie 4₁ permet de connecter le tuyau de décharge To à la zone d'évacuation ZV₁ du premier échangeur 2₁ ; et une seconde connectique de sortie 4₂ permet de connecter le tuyau de décharge T_{D} à la zone d'évacuation ZV₂ du second échangeur 2₂.

Sur la figure 1, une extrémité 420 du tuyau d'alimentation T_{A} est obturée de manière étanche au fluide, par exemple au moyen d'un bouchon 4200. Divers accessoires (non représentés) tels que des purgeurs, capteurs de température ou compteur d'énergie peuvent être connectés au tuyau T_{A}, en amont du bouchon 4200. L'autre extrémité 410 du tuyau T_{A} est connectée à un dispositif d'alimentation 4100 en fluide de refroidissement, par exemple une pompe. De même, une extrémité 430 du tuyau de décharge T_{D} est obturée de manière étanche au fluide au moyen d'un bouchon 4300. L'autre extrémité 450 du tuyau de décharge T_{D} est connectée à un dispositif 4500 de collecte du fluide de refroidissement, par exemple un chauffe-eau sanitaire, un échangeur thermique d'une habitation ou d'une piscine, etc.

Les panneaux P₁, P₂ sont ainsi raccordés en parallèle. Le fluide de refroidissement est envoyé sous pression dans le tuyau commun d'alimentation T_{A}, par exemple entre 0,5 bars et 3 bars. Le fluide pénètre dans chacun des échangeurs thermiques 2₁, 2₂ au niveau des connectiques 3₁, 3₂ puis circule dans chacun desdits échangeurs, entre les zones d'arrivée ZA₁, ZA₂ et les zones d'évacuation ZV₁, ZV₂. Le fluide chargé de calorie ressort des échangeurs par les connectiques 4₁, 4₂ pour être récupéré dans le tuyau commun de décharge T_{D}.

Le tuyau d'alimentation T_{A} et le tuyau de décharge T_{D} peuvent être rigides, par exemple réalisés en PVC (polychlorure de vinyle), en PP (polypropylène), etc. Ils sont toutefois préférentiellement flexibles, de sorte qu'ils puissent être facilement enroulés et déroulés. L'adjectif « *flexible »* doit être compris comme un synonyme de « *souple* », en ce sens que les tuyaux se plient ou se courbent manuellement, sans outillage particulier. Ils peuvent par exemple être réalisés en EPDM (éthylènepropylène-diène monomère) tressé inox ou textile, en multicouches, en PE (polyéthylène), en silicone, en caoutchouc, avec une ou plusieurs couches de toile textile noyées dans l'épaisseur souple et/ou avec une tresse en acier inoxydable et/ou avec un système anti-torsion constitué d'un tissu bouclé à renfort hélicoïdal.

L'utilisation d'un tuyau T_{A}, T_{D} flexible facilite le montage dans la mesure où il peut être momentanément plié et/ou courbé pour connecter les connectiques 3₁, 3₂. En tout état de cause, une fois l'installation achevée, le tuyau d'alimentation T_{A} et le tuyau de décharge T_{D} peuvent être rectilignes, sans coude ou avec des coudes limités, au niveau des bords des panneaux P₁, P₂, ce qui limite fortement les pertes de charge.

Sur les figures 2 et 3, seule est représentée la connectique d'entrée 3₁ permettant de connecter le tuyau d'alimentation T_{A} à la zone d'arrivée ZA₁ du premier échangeur 2₁. Les autres connectiques 3₂, 4₁ et 4₂ sont toutefois réalisées de la même façon à l'autre zone d'arrivée ZA₂ et aux zones d'évacuation ZV₁, ZV₂.

La connectique 3₁ comporte un corps tubulaire 30 emmanché sur le tuyau T_{A}. Sur les figures 2 et 3, ce corps tubulaire 30 se présente sous la forme d'un tube cylindrique dont le diamètre interne correspond sensiblement au diamètre externe du tuyau T_{A}, en étant préférentiellement légèrement inférieur, par exemple de quelques dixièmes de millimètres, pour faciliter la compression du joint 302. De manière plus générale, le corps tubulaire 30 à la même section que le tuyau T_{A}. A titre d'exemple, son épaisseur est comprise entre 1 mm et 3 cm et sa longueur comprise entre 5 cm et 20 cm, préférentiellement comprise entre 7 cm et 10 cm. Le corps tubulaire 30 est préférentiellement réalisé dans un matériau rigide du type polychlorure de vinyle (PVC), PE, PP, PMMA (polyméthacrylate de méthyle), polycarbonate, ABS (acrylonitrile butadiène styrène), PA (polyamide), PPS (polysulfure de phénylène), aluminium, acier, laiton, cuivre, zinc, ..., ou dans un matériau plus flexible du type EPDM tressé inox ou textile.

Le corps tubulaire 30 peut être une pièce monobloc. Pour simplifier son montage sur le tuyau T_{A}, le corps tubulaire 30 est toutefois préférentiellement formé de deux demi-coquilles 30a et 30b assemblées entre-elles. Cette solution évite d'avoir à faire glisser les corps tubulaires 30 tout le long du tuyau T_{A} comme cela est le cas pour les corps tubulaires monoblocs.

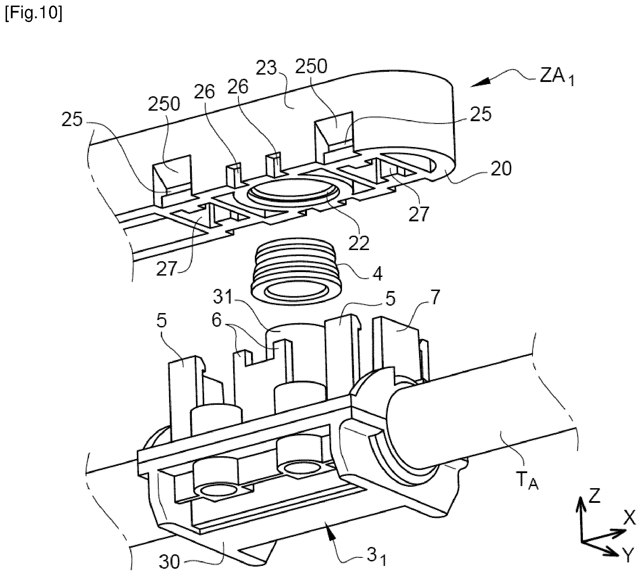

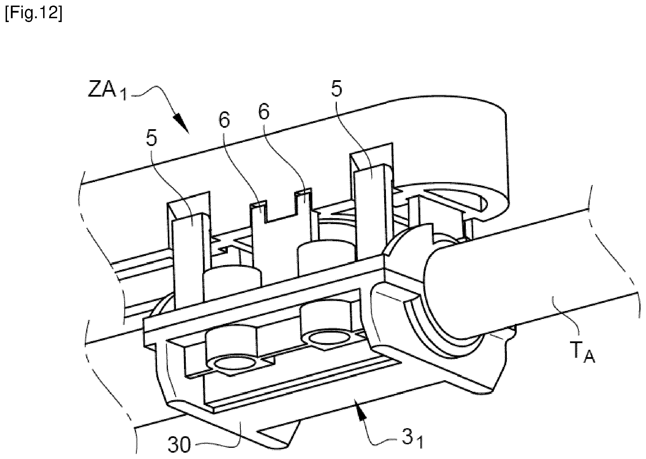

Les demi-coquilles 30a, 30b peuvent consister en deux pièces distinctes ou être reliées entre elles au niveau d'un de leur bord par une charnière. Chaque demi-coquille 30a, 30b présente une face interne et une face externe. Les faces internes enveloppent la face externe de la paroi du tuyau T_{A} lorsque les deux demi-coquilles 30a, 30b sont à l'état assemblé (figures 10 et 12). L'assemblage est avantageusement réalisé par vissage, au moyen de vis qui s'insèrent dans des logements dédiés moulés sur la face externe des demi-coquilles 30a, 30b. D'autres techniques d'assemblage peuvent être employées, par exemple par collage, soudage ou au moyen d'organes de blocage, par exemple par clipsage.

Un tube 31 est fixé sur une face externe du corps tubulaire 30 de laquelle il fait saillie. Le tube 31 et la face externe du corps tubulaire 30 forment une pièce monobloc. Ce tube 31 assure une communication fluidique entre le tuyau T_{A} et l'échangeur 2₁, et plus particulièrement avec sa zone d'arrivée ZA₁.

Le tube 31 présente un axe Z-Z qui est normal à l'axe longitudinal X-X du corps 30. Le tube 31 est ouvert à ses deux extrémités. Il débouche, au niveau de son extrémité distale, dans l'espace interne du corps 30. L'extrémité distale 311 du tube 31 ne dépasse pas de la paroi interne du corps 30 contrairement à la solution décrite dans le document brevet WO 2019/110884.

Sur les figures annexées, ce tube 31 est cylindrique et présente une face externe lisse. A titre d'exemple, son diamètre externe est compris entre 10 mm et 20 mm, son diamètre interne compris entre 8 mm et 15 mm et sa longueur comprise entre 10 mm et 40 mm. Le tube 31 est réalisé dans un matériau rigide, préférentiellement le même matériau que le corps tubulaire 30, bien qu'il puisse être réalisé dans un matériau différent. L'extrémité supérieure 311 du tube 31 est avantageusement biseautée pour faciliter son insertion dans l'échangeur 2₁ comme expliqué plus avant dans la description.

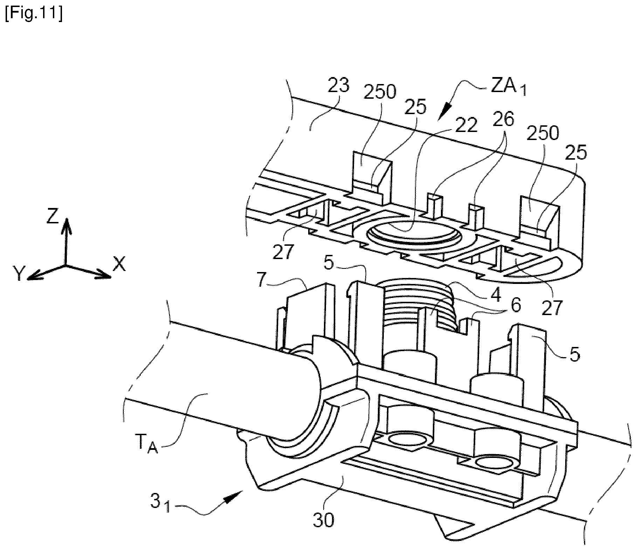

Sur les figures 10 et 11, l'échangeur thermique 2₁ présente une paroi 20 dans laquelle est aménagé un trou 22. La paroi 20 est préférentiellement la paroi inférieure de la zone d'arrivée ZA₁, ou, en d'autres termes, la paroi de fond de ladite zone. Elle se situe en vis-à-vis du corps 30 lorsque celui-ci est connecté à l'échangeur 2₁. Son épaisseur est par exemple comprise entre 2 mm et 5 mm. Le trou 22 est traversant, c'est-à-dire qu'il traverse de part en part la paroi 20. Son axe est perpendiculaire à la paroi 20. Il peut être obtenu par perçage de la paroi 20 ou être conformé directement lors du moulage de la zone d'arrivée ZA₁. Le trou 22 a par exemple un diamètre compris entre 15 mm et 25 mm. Un simple trou étant réalisé dans la paroi 20, la surface externe de celle-ci peut être parfaitement plane, sans élément en saillie, contrairement à la solution décrite dans le document brevet WO 2019/110884.

En se rapportant aux figures 2 et 3, le tube 31 s'emmanche librement dans le trou 22 lors de la connexion du corps tubulaire 30 à l'échangeur 2₁. Par « librement » on entend que le tube 31 et/ou le trou 22 ne sont pas intrinsèquement pourvus d'éléments de fixation les maintenant en position. En d'autres termes, ni le tube 31, ni le trou 22 n'assurent le maintien en position du corps tubulaire 30 sur l'échangeur 2₁. Cet emmanchement est réalisé selon la direction d'enfoncement Z-Z du tube 31 dans le trou 22. Dans cette configuration, l'extrémité supérieure 311 du tube 31 est située à l'intérieur de la zone ZA₁, ou, en tout état de cause, débouche dans ladite zone.

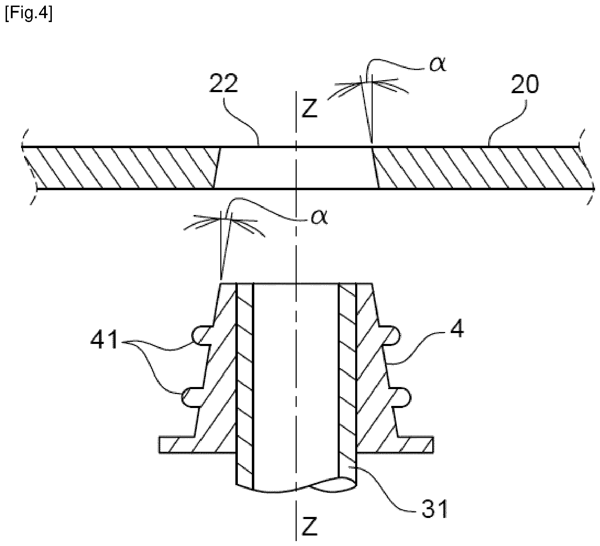

Pour assurer l'étanchéité au fluide entre le tube 31 et le trou 22, un joint d'étanchéité 4 est installé autour dudit tube. Ce joint 4 n'a qu'une fonction « *étanchéité* » et n'assure pas le maintien en position du corps tubulaire 30 sur l'échangeur 2₁. Selon un mode préféré de réalisation illustré sur les figures 4, 12 et 13, le joint 4 se présente sous la forme d'un manchon qui s'emmanche sur la paroi externe du tube 31. La longueur du manchon 4 correspond sensiblement à celle du tube 31. Son diamètre interne correspond également au diamètre externe du tube 31. Le manchon 4 est préférentiellement réalisé en élastomère, caoutchouc, PTFE, PVC, ou SEBS. Les meilleurs résultats en termes d'étanchéité et de tenue au vieillissement, sont obtenus en utilisant un manchon en TPV (thermoplastiques vulcanisés).

La paroi interne du manchon 4 est ajustée à la paroi externe du tube 31 et présente une section correspondante à la section de cette dernière. Selon une caractéristique avantageuse de l'invention, le manchon 4 a une paroi externe conique. Cette conicité est exagérée sur la figure 4 ; elle représente, en pratique, un angle α compris entre 0,5° et 3°. La paroi extérieure est également pourvue d'un ou plusieurs bourrelets ou nervures circulaires 41, faisant saillie de ladite paroi extérieure par exemple de 1 mm à 3 mm.

Le trou 22 présente la même conicité, sa paroi interne étant ajustée à la paroi externe du manchon 4. Aussi, lorsque le tube 21 - pourvu du manchon 4 - s'emmanche dans le trou 22, les bourrelets ou nervures 41 vont avoir tendance à se comprimer contre la paroi interne dudit trou de manière à former étanchéité entre ledit manchon et ledit trou. On obtient de manière concomitante un serrage du manchon 4 autour de la paroi externe du tube 31, de sorte que l'étanchéité entre ledit manchon et ledit tube est également garantie. Cette solution d'étanchéité très simple, permet de simplifier la conception de la connectique 3₁, de réduire les coûts, et d'assurer une connexion très rapide manuelle, sans aucun outillage. En outre, un simple trou 22 étant réalisé dans la paroi 20, la surface externe de cette dernière peut être parfaitement plane, sans élément en saillie. On peut ainsi réduire au minimum la compacité des zones ZA₁, ZA₂, ZV₁, ZV₂,, notamment leur hauteur, et partant la compacité de l'échangeur 2₁, 2₂, en comparaison de la solution décrite le document brevet WO 2019/110884.

Le diamètre du trou 22 étant supérieur à sa hauteur (hauteur qui correspond à l'épaisseur de la paroi 20), le tube 31 n'est maintenu latéralement que sur une courte distance. La longueur de l'assemblage (partie cylindrique commune) du tube 31 et du trou 22 est donc globalement très petite devant le diamètre ajusté. Ce centrage court induit un rotulage du tube 21 susceptible de nuire à l'étanchéité. Pour résoudre cette problématique, on disjoint la fonction de blocage en position de la connectique 3₁, de la fonction d'étanchéité (assurée par l'ensemble tube 31-manchon 4-trou 22).

En se rapportant aux figures 3 et 10 à 12, le corps tubulaire 30 est assemblé sur l'échangeur thermique 2₁ au moyen d'organes 5, 25 configurés pour réaliser un emboîtage élastique dudit corps sur ledit échangeur. Ces organes assurent le maintien en position du corps 30 sur l'échangeur 2₁ et sont distincts du manchon 4, du tube 31 et du trou 22. Plus particulièrement, le corps 30 est pourvu d'organes d'encliquetage 5 coopérant avec des organes d'encliquetage complémentaires 25 aménagés sur l'échangeur thermique 2₁.

Les organes d'encliquetage du corps 30 se présentent sous la forme de pattes 50 qui s'étendent, depuis la surface externe du corps 30, parallèlement au tube 31 (et parallèlement à l'axe Z-Z) et du même côté que celui-ci. Sur la figure 3, l'espacement entre deux pattes 50 qui se font face (c'est-à-dire disposées symétriquement par rapport au plan médian du corps 30) correspond à la largeur de la zone ZA₁. Chaque patte 50 comprend une extrémité solidaire du corps 30 et une extrémité libre pourvue d'un élément d'encliquetage 51 qui peut se présenter sous la forme d'un crochet inversé. Ce crochet 51 comprend une surface de contact inclinée dans le sens de l'insertion du tube 31 dans le trou 22 et une surface de contact normale au sens de sortie dudit tube.

La longueur des pattes 50 correspond sensiblement à celle du tube 31, c'est-à-dire comprise entre 10 mm et 40 mm par exemple. Les pattes 50 présentent une certaine flexibilité leur permettant de se déformer élastiquement et/ou de se plier, au moins localement, notamment pour que leur élément d'encliquetage 51 puisse atteindre les trous d'encliquetage 25 décrits plus avant dans la description. Pour assurer cette flexibilité, la largeur et l'épaisseur des pattes 50 sont par exemple comprises entre 2 mm et 5 mm.

Les organes d'encliquetage 5 forment, avec la face externe du corps 30, une pièce monobloc et, pour simplifier la conception et réduire les coûts de fabrication, ils sont préférentiellement obtenus lors du moulage dudit corps. La demanderesse a constaté que deux organes d'encliquetage 5 étaient suffisants, mais un nombre supérieur peut être envisagé (par exemple 4, 6, ou 8). Sur les figures annexées, sont notamment représentées deux paires d'organes d'encliquetage 5 installées de chaque côté corps 30.

Les organes d'encliquetage 5 coopèrent avec des trous d'encliquetage 25 aménagés sur l'échangeur 2₁. Sur les figures 3, 9, et 10 à 12, ces trous d'encliquetage 25 sont réalisés dans les parois latérales 23 de la zone ZA₁. Ainsi, lorsque le tube 31 commence à être inséré dans le trou 22, la surface de contact inclinée de chaque crochet 51 glisse sur la surface externe de la paroi 23, de sorte que les pattes 50 s'écartent automatiquement, en pivotant dans une direction opposée audit tube, autour de leur extrémité fixe. Au moment où les crochets 51 atteignent les trous d'encliquetage 25 (en pratique lorsque le tube 31 est correctement inséré dans le trou 22), lesdits crochets, par un effet ressort des pattes 50, se verrouillent automatiquement dans lesdits trous d'encliquetage. La surface de contact normale des crochets 51 bloque leur sortie des trous d'encliquetage 25, de sorte que le tube 31 ne peut pas sortir hors du trou 22. Le retrait du tube 31 selon l'axe Z-Z est bloqué. La coaxialité du tube 31 et du trou 22 est ainsi assurée ce qui garantit une alimentation (ou une décharge) optimale du fluide de refroidissement dans (ou hors) l'échangeur thermique 2₁, notamment lorsque le fluide est sous pression.

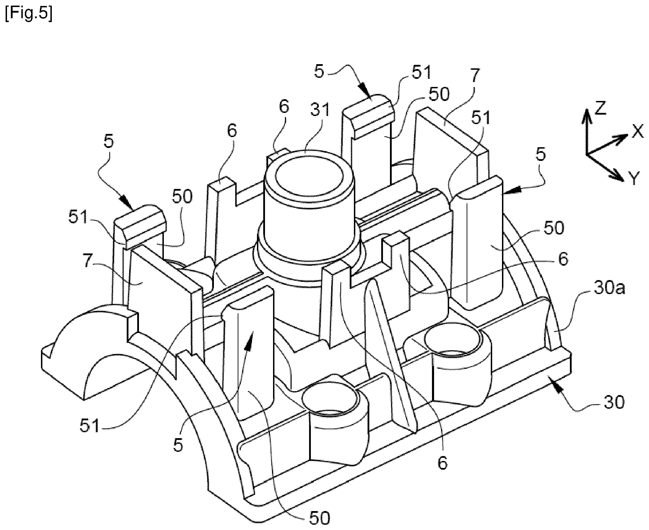

Sur la figure 5, le corps 30 est pourvu de deux paires de pattes 50. Les pattes 50 de chaque paire sont disposées en miroir, symétriquement par rapport au plan médian du corps 30 (plan incluant les axes X-X et Z-Z). Dans ce mode de réalisation, le corps 30 et le tuyau T_{A} sont orientés dans le sens de la longueur de la zone ZA₁, c'est-à-dire dans la largeur du panneau P₁ (comme dans la figure 1). Ce mode de réalisation convient lorsque les panneaux sont disposés en « portait », les tuyaux T_{A}, T_{D} restant à l'horizontale.

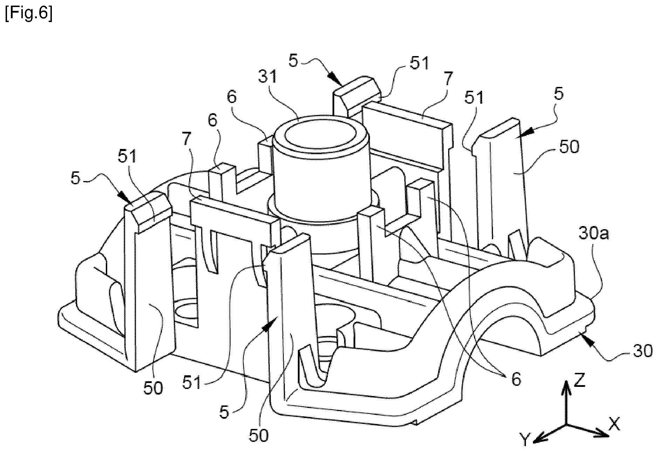

Dans la variante de réalisation de la figure 6, les pattes 50 de chaque paire sont disposées en miroir, symétriquement par rapport au plan sécant du corps 30 (plan incluant les axes Y-Y et Z-Z). Dans ce mode de réalisation, le corps 30 et le tuyau T_{A} sont orientés dans la largeur de la zone ZA₁, c'est-à-dire dans la longueur du panneau P₁. Ce mode de réalisation convient lorsque les panneaux sont disposés en « paysage », les tuyaux T_{A}, T_{D} restant ici encore en position horizontale.

Les organes d'encliquetage 5 ont pour principale fonction de bloquer axialement le tube 31 dans le trou 22. Il est toutefois nécessaire de bloquer également les déplacements transversaux (selon les axes X-X et Y-Y) et de rotation (autour des axes X-X, Y-Y et Z-Z) du corps 30 par rapport à l'échangeur thermique 2₁, de sorte que la connectique 3₁ reste attachée rigidement audit échangeur et évite de basculer ou de s'arracher lors de l'installation ou de la manipulation du panneau P₁ et/ou lors de la mise sous pression du fluide de refroidissement.

Une solution consisterait à sur-dimensionner les organes d'encliquetage 5 de sorte que tous les efforts et/ou contraintes soient repris par lesdits organes. On pourrait par exemple prévoir des pattes 50 et des crochets 51 plus larges. Le principal inconvénient de cette solution est qu'il faut davantage de force pour emboîter la connectique 3₁ dans l'échangeur thermique 2i. Le montage serait donc beaucoup plus difficile.

Selon une caractéristique de l'invention, on préfère maintenir la flexibilité des organes d'encliquetage 5 (pour garder un montage aisé et rapide, et donc conserver des pattes 50 relativement fines) et répartir dans d'autres éléments les efforts et/ou contraintes mécaniques générés par des déplacements transversaux et/ou rotations du corps 30 par rapport à l'échangeur thermique 2₁.

En se rapportant notamment aux figures 2, 5 et 6, un ou plusieurs ergots 6 sont aménagés sur le corps tubulaire 30. Ces ergots 6 sont distincts des organes d'encliquetage 5 et font saillie de la surface externe du corps 30 et sont disposés à proximité du tube 31 (par exemple à environ 5 mm de sa paroi externe). Sur les figures annexées, quatre ergots 6 sont représentés, disposés symétriquement par rapporta au plan médian du corps 30. Un nombre inférieur ou supérieur d'ergots 6 peut toutefois être envisagé. Leurs dimensions sont relativement réduites. A titre d'exemple, leur hauteur, largeur et épaisseur sont comprises entre 3 mm et 5 mm.

Les ergots 6 s'insèrent dans des logements complémentaires 26 aménagés sur l'échangeur 2₁. Sur les figures 2 et 11, ces logements 26 sont réalisés dans la paroi de fond 20 de la zone ZA₁ et/ou à l'intersection de ladite paroi de fond et des parois latérales 23. Ils sont agencés de sorte que lorsque le tube 31 est inséré dans le trou 22, les ergots 6 se logent dans les logements 26. Dans cette position illustrée sur la figure 14, les ergots 6 assurent principalement un blocage des déplacements transversaux : selon l'axe X-X (selon la configuration de la figure 5) ou selon l'axe Y-Y (selon la configuration de la figure 6) ; et de rotation autour de l'axe Z-Z et de l'axe X-X (selon la configuration de la figure 5) ou de l'axe Y-Y (selon la configuration de la figure 6) du corps 30 par rapport à l'échangeur thermique 2₁. Grâce à cette coopération, la robustesse de la connectique 3₁ et son maintien en position contre la zone ZA₁ sont améliorés.

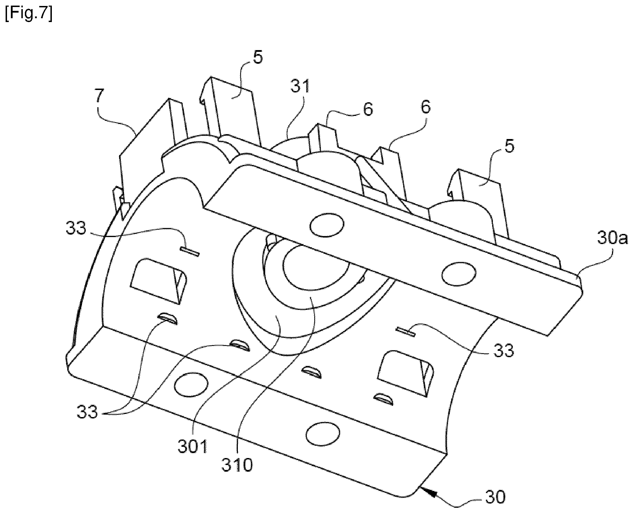

Pour améliorer encore davantage la robustesse et le maintien en position de la connectique 31, on prévoit avantageusement un ou plusieurs autres éléments de blocage 7 sur le corps 31. Sur la figure 5, ces éléments 7 se présentent sous la forme de nervures orientées selon l'axe Y-Y du corps 30. Ces nervures 7 sont distinctes des ergots 6 et des organes d'encliquetage 5 et font saillie de la surface externe du corps 30. Elles sont disposées de part et d'autre du tube 31. Sur la figure 5, elles sont disposées symétriquement par rapport au plan sécant du corps 30 et sur la figure 6, symétriquement par rapport au plan médian dudit corps. A titre d'exemple, la longueur des nervures 7 est comprise entre 15 mm et 50 mm et leur hauteur comprise entre 5 mm et 40 mm et leur épaisseur comprise entre 3 mm et 5 mm. Sur les figures 5 et 7, deux nervures 7 sont représentées, mais un nombre supérieur ou inférieur peut être envisagé.

Les nervures 7 s'insèrent dans des logements complémentaires 27 aménagés sur l'échangeur 2₁. Sur la figure 11, ces logements 27 sont réalisés dans la paroi de fond 20 de la zone ZA₁. Ils sont agencés de sorte que lorsque le tube 31 est inséré dans le trou 22, les nervures se logent dans les logements 27. Dans cette position illustrée sur la figure 12, les nervures 7 assurent principalement un blocage des déplacements transversaux : selon l'axe Y-Y (selon la configuration de la figure 5) ou selon l'axe X-X (selon la configuration de la figure 6) ; et de rotation autour de l'axe Z-Z et de l'axe Y-Y (selon la configuration de la figure 5) ou de l'axe X-X (selon la configuration de la figure 6) du corps 30 par rapport à l'échangeur thermique 2₁.

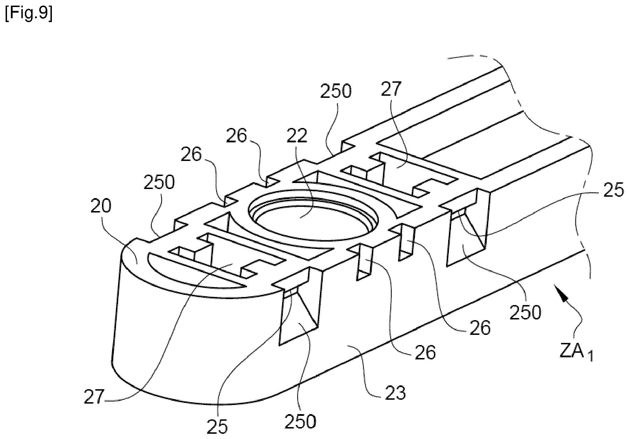

Pour chaque nervure 7, une série de plusieurs logements 27 parallèles (par exemple deux logements) peut être prévue comme illustré sur la figure 9. En effet, selon les modèles des connectiques, on peut prévoir que les nervures 7 soient plus ou moins espacées l'une de l'autre. La série de logements permet de loger les nervures quel que soit cet espacement.

Sur les figures 9 à 19, chaque trou d'encliquetage 25 est aménagé dans une goulotte 250 réalisés dans la paroi latérale 23 du de la zone ZA₁. Ces goulottes ont sensiblement la même largeur que les pattes 50, de sorte que lesdites pattes peuvent glisser dedans. Lors de l'insertion du tube 31 dans le trou 22, les pattes 50 et les crochets 51 sont alors guidés dans les goulottes 250. Et après verrouillage des crochets 51 dans les trous d'encliquetage 25, les pattes 50 se trouvent logées dans les goulottes 250 de sorte qu'elles bloquent les déplacements transversaux du corps 30 selon l'axe X-X (dans la configuration de la figure 5) ou selon l'axe Y-Y (dans la configuration de la figure 5). Ce détail de conception contribue à améliorer encore davantage le maintien en position de la connectique 3₁ contre la zone ZA₁.

Sur les figures annexées, le corps 30 comprend des organes d'encliquetage 5, des ergots 6 et des nervures 7. Le corps 30 peut toutefois présenter uniquement des organes d'encliquetage 5. Selon un mode de réalisation, le corps 30 comprend des organes d'encliquetage 5 et des ergots 6, mais pas de nervures 7. Selon un autre mode de réalisation, le corps 30 comprend des organes d'encliquetage 5 et des nervures 7, mais pas d'ergots 6. Selon encore un autre mode de réalisation non couvert par les revendications, le corps 30 comprend des ergots 6 et des nervures 7 mais pas d'organes d'encliquetage 5.

Sur la figure 2, un élément d'étanchéité 302 assure une étanchéité fluidique entre la face interne du corps 30 et la face externe de la paroi du tuyau T_{A}. En se rapportant à la figure 7, cet élément d'étanchéité 302 est situé autour de l'extrémité distale 310 du tube 31 qui débouche dans le corps 30. Pour simplifier la conception et diminuer les coûts, cet élément d'étanchéité 302 se présente avantageusement sous la forme d'un joint torique installé dans un aménagement 301 réalisé sur la face interne du corps 30, autour de l'extrémité distale 310. Ce joint torique est installé dans le corps 30, préalablement à l'insertion du tuyau T_{A}. D'autres techniques peuvent toutefois être employées pour assurer l'étanchéité, notamment des techniques par soudage ou collage du corps tubulaire 30 sur la face externe du tuyau T_{A}.

Contrairement à la solution décrite dans le document brevet WO 2019/110884, l'extrémité distale 311 du tube 31 ne dépasse pas de la paroi interne du corps 30 et ne vient pas en prise avec la paroi du tuyau T_{A}. Le tube 31 ne contribue donc pas à maintenir le tuyau en position dans le corps 30. En se rapportant à la figure 7, ce maintien en position est assuré par des griffes 33 (ou des picots) aménagées sur la paroi interne du corps 30. A titres d'exemple, ces griffes 33 ont entre 1 mm et 2 mm de hauteur, entre 1 mm et 3 mm de largeur et entre 0,5 et 2 mm d'épaisseur. Leur nombre peut varier de 5 à 30. Lorsque le tuyau T_{A} est inséré dans le corps 30, les griffes 33 agissent contre la face externe de la paroi dudit tuyau et génèrent un frottement statique qui s'oppose au mouvement relatif dudit corps et dudit tuyau.

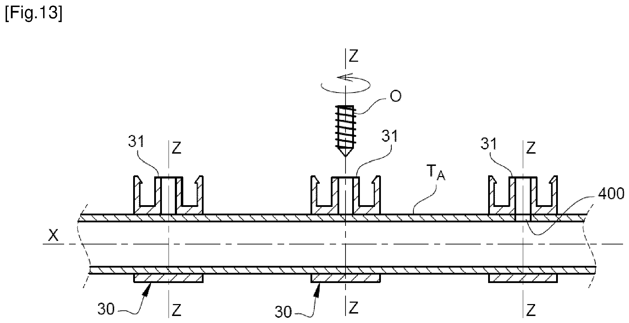

Des étapes du procédé de montage d'une installation conforme à l'invention vont maintenant être décrites en référence à la figure 13.

Lorsqu'ils sont monoblocs, les corps tubulaires 30 sont emmanchés sur le tuyau T_{A}, en les faisant glisser - ou coulisser- axialement (selon l'axe X-X) le long dudit tuyau. Lorsqu'ils sont formés de demi-coquilles 30a et 30b, ils sont plus simplement mis en place sur le tuyau T_{A} en installant ces demi-coquilles autour du tuyau et en les solidarisant. Les corps tubulaires 30 sont espacés les uns des autres, préférentiellement à intervalles réguliers par exemple compris entre 50 cm à 10 m. En pratique, cet intervalle dépend de la distance inter-panneaux.

Lorsque les corps tubulaires 30 sont correctement installés autour du tuyau T_{A}, on réalise une série de perçages radiaux 400 dans ledit tuyau. Chaque perçage 400 est réalisé au travers du tube 31 du corps 30. En pratique, les perçages 400 sont réalisés au moyen d'un outil O du type foret qui passe au travers du tube 31, lequel tube fait office de guide. Ainsi, chaque perçage 400 est parfaitement coaxial à l'axe Z-Z du tube 31. Le diamètre des perçages 400 correspond au diamètre interne des tubes 31. Le même procédé s'applique au tuyau de décharge T_{D}.

On peut ainsi fournir un tuyau T_{A}, T_{D} de plusieurs mètres de long, par exemple 50 m, sur lequel sont installés plusieurs corps tubulaires 30, par exemple 49 corps espacés d'1 m chacun. Lorsque le tuyau T_{A}, T_{D} est flexible, celui-ci peut être enroulé en bobine, et donc facilement stockable avec un encombrement réduit. Si l'installation comprend deux panneaux côte-à-côte, l'installateur peut couper une portion de 2 m pour former le tuyau d'alimentation T_{A} et recouper une autre portion de 2 m pour former le tuyau de décharge T_{D}. Si l'installation comprend 10 panneaux côte-à-côte, l'installateur pourra couper deux portions de 10 m pour former les tuyaux T_{A}, T_{D}. Le reste du tuyau sera conservé pour la réalisation ultérieure d'une autre installation.

Le diamètre des tuyaux T_{A}, T_{D} peut être plus important que celui des tubes 31 de manière à pouvoir supporter un débit plus important. Par exemple, si le débit de fluide circulant dans chacun des deux panneaux P₁, P₂ est de 5 m³/h, le débit de fluide circulant dans chacun des tuyaux T_{A}, T_{D} pourra être de 10 m³/h, avec un diamètre interne suffisamment important pour limiter les pertes de charge dans ledit tuyau qui peuvent être difficiles à supporter pour une pompe. L'invention permet finalement d'obtenir des connectiques 3₁, 3₂, 4₁, 4₂ dont l'encombrement est relativement faible par rapport au diamètre des tuyaux T_{A}, T_{D}, de sorte que ces derniers puissent être situés au plus près des cadres 9 des panneaux P₁, P₂, comme cela est illustré sur les figures 2 et 3. Cette configuration est particulièrement avantageuse dans la mesure où dans une installation photovoltaïque en sous-toiture, la distance entre les panneaux P₁, P₂ et leur support (par exemple une toiture) est généralement réduite. En d'autres termes, ces connectiques 3₁, 3₂, 4₁, 4₂ permettent de loger des tuyaux T_{A}, T_{D} de diamètre important, capables de supporter des débits importants, dans un espace panneaux/support qui est quant à lui étroit. Sur les figures 2 et 3, on constate d'ailleurs que la bordure inférieure 90 du cadre 9 vient au raz de la paroi inférieure 20 de la zone ZA₁, laquelle paroi définit la hauteur maximale du panneau P₁. Grâce aux solutions constructives de l'invention, aucun élément ne fait saillie de la surface externe de cette paroi 20. On peut ainsi réduire l'encombrement du panneau P₁, notamment sa hauteur, de façon à utiliser des cadres 9 dont la hauteur est inférieure à 45 mm, préférentiellement inférieure ou égale à 30 mm.

L'agencement des différents éléments et/ou moyens et/ou étapes de l'invention, dans les modes préférés de réalisation décrits ci-dessus, ne doit pas être compris comme exigeant un tel agencement dans toutes les implémentations. En particulier :
- Le manchon d'étanchéité 4 peut être substitué par un ou plusieurs : joints toriques, joints à lobes, joints à lèvre, joints à lamelles, etc.
- La connectique 3₁, 3₂, 4₁, 4₂, ne se fixe pas nécessairement sur une des zones d'arrivée ZA₁, ZA₂ et/ou d'évacuation ZV₁, ZV₂ de l'échangeur. Si ce dernier à une autre configuration, par exemple sans zone d'arrivée et/ou d'évacuation, ou si ces zones ont d'autres formes, la connectique 3₁, 3₂, 4₁, 4₂, peut être connectée à une autre paroi dudit échangeur.
- Le positionnement et la forme des organes d'encliquetage 5, des ergots 6 et des nervures 7 ne sont pas limités à ceux représentés sur les figures annexées. Il en est de même pour les trous d'encliquetage 25 et les logements 26 et 27. Ces éléments peuvent notamment être aménagés sur d'autres parois de l'échangeur 2₁.

En outre, une ou plusieurs caractéristiques exposées seulement dans un mode de réalisation peuvent être combinées avec une ou plusieurs autres caractéristiques exposées seulement dans un autre mode de réalisation. De même, une ou plusieurs caractéristiques exposées seulement dans un mode de réalisation peuvent être généralisées aux autres modes de réalisation, même si ce ou ces caractéristiques sont décrites seulement en combinaison avec d'autres caractéristiques. 1

## Revendications

1. Installation comprenant :
- un tuyau assurant l'alimentation (T_{A}) ou la décharge (T_{D}) d'un fluide de refroidissement,
- au moins un panneau solaire hybride (P₁), ledit panneau comprenant :
- un module photovoltaïque (1₁),
- un échangeur thermique (2₁) dans lequel s'écoule un fluide de refroidissement,
- une connectique (3₁) connectant l'échangeur thermique (2₁) au tuyau (T_{A}, T_{D}), ladite connectique comprenant :
- un corps tubulaire (30) installé autour du tuyau (T_{A}, T_{D}),
- un tube (31) installé sur une paroi externe du corps tubulaire (30) et qui assure une communication fluidique entre le tuyau (T_{A}, T_{D}) et l'échangeur thermique (2₁), lequel tube et laquelle paroi externe forment une pièce monobloc,
et installation dans laquelle:
- l'échangeur thermique (2₁) présente une paroi (20) dans laquelle est aménagé un trou (22), le tube (31) s'emmanchant librement dans ledit trou, ledit tube et ledit trou étant dépourvus d'éléments de fixation assurant leur maintien en position,
- le tube (31) est pourvu d'un joint d'étanchéité (4) assurant une étanchéité fluidique entre ledit tube et le trou (22),
- le joint d'étanchéité (4) se présente sous la forme d'un manchon qui s'emmanche sur la paroi externe du tube (31),
- le corps tubulaire (30) est assemblé sur l'échangeur thermique (2₁) au moyen d'organes (5, 25) configurés pour réaliser un emboîtage élastique dudit corps sur ledit échangeur, lesquels organes sont distincts du manchon (4), du tube (31) et du trou (22), lesquels organes assurent le maintien en position dudit corps sur ledit échangeur.

2. Installation selon la revendication 1, dans laquelle l'emboîtage élastique est réalisé au moyen d'organes d'encliquetage (5) aménagés sur le corps tubulaire (30), lesquels organes d'encliquetage coopèrent avec des organes d'encliquetage complémentaires (25) aménagés sur l'échangeur thermique (2₁).

3. Installation selon la revendication 2, dans laquelle :
- les organes d'encliquetage (5) du corps tubulaire (30) se présentent sous la forme de pattes flexibles (50) qui s'étendent, depuis la surface externe dudit corps, parallèlement au tube (31) et du même côté que ledit tube,
- chaque patte (50) comprend une extrémité solidaire du corps tubulaire (30) et une extrémité libre pourvue d'un élément d'encliquetage (51),
- chaque élément d'encliquetage (51) coopère avec un trou d'encliquetage (25) aménagé sur l'échangeur thermique (2₁).

4. Installation selon la revendication 3, dans laquelle le corps tubulaire (30) est pourvu de deux paires de pattes (50), les pattes de chaque paire étant disposées en miroir, symétriquement par rapport au plan médian dudit corps.

5. Installation selon la revendication 3, dans laquelle le corps tubulaire (30) est pourvu de deux paires de pattes (50), les pattes de chaque paire étant disposées en miroir, symétriquement par rapport au plan sécant dudit corps.

6. Installation selon l'une des revendications 3 à 5, dans laquelle chaque trou d'encliquetage (25) est aménagé dans une goulotte (250) réalisée dans une paroi (23) l'échangeur thermique (2₁), lesquelles goulottes forment des guides pour les pattes (50) lors de l'emboîtage du corps tubulaire (30) sur la paroi dudit échangeur.

7. Installation selon l'une des revendications précédentes, dans laquelle un ou plusieurs ergots (6) sont aménagés sur le corps tubulaire (30), lesquels ergots s'insèrent dans des logements complémentaires (26) aménagés sur l'échangeur (2₁), lesquels ergots sont distincts des organes d'encliquetage (5).

8. Installation selon l'une des revendications précédentes, dans laquelle une ou plusieurs nervures (7) sont aménagées sur le corps tubulaire (30), lesquelles nervures s'insèrent dans des logements complémentaires (27) aménagés sur l'échangeur (2₁), lesquelles nervures sont distinctes des organes d'encliquetage (5).

9. Installation selon la revendication 8, dans laquelle les nervures (7) sont disposées symétriquement par rapport au plan sécant du corps tubulaire (30).

10. Installation selon la revendication 8, dans laquelle les nervures (7) sont disposées symétriquement par rapport au plan médian du corps tubulaire (30).

11. Installation selon l'une des revendications précédentes, dans laquelle des griffes ou picots (33) sont aménagés sur la paroi interne du corps tubulaire (30).

12. Installation selon l'une des revendications précédentes, dans laquelle :
- le manchon (4) a une paroi externe conique,
- le trou (22) présente la même conicité que le manchon (4), la paroi interne dudit trou étant ajustée à la paroi externe dudit manchon.

13. Installation selon la revendication 12, dans laquelle la paroi extérieure du manchon (4) est pourvue d'un ou plusieurs bourrelets ou nervures circulaires (41), faisant saillie de ladite paroi extérieure. 1

## Patentansprüche

1. Anlage, umfassend:
- eine Leitung, die die Zufuhr (T_{A}) oder die Abfuhr (T_{D}) eines Kühlfluids gewährleistet,
- mindestens ein Hybrid-Solarpanel (P₁), wobei das Panel Folgendes umfasst:
- ein photovoltaisches Modul (1₁),
- einen Wärmetauscher (2₁), in dem ein Kühlfluid fließt,
- eine Verbindungsanordnung (3₁), die den Wärmetauscher (2₁) mit der Leitung (T_{A}, T_{D}) verbindet, wobei die Verbindungsanordnung Folgendes umfasst:
- einen rohrförmigen Körper (30), der um die Leitung (T_{A}, T_{D}) herum installiert ist,
- ein Rohr (31), das an einer Außenwand des rohrförmigen Körpers (30) installiert ist und das eine Fluidverbindung zwischen der Leitung (T_{A}, T_{D}) und dem Wärmetauscher (2₁) gewährleistet, wobei das Rohr und die Außenwand ein einstückiges Teil bilden,
und wobei in der Anlage:
- der Wärmetauscher (2₁) eine Wand (20) aufweist, in der ein Loch (22) vorgesehen ist, wobei das Rohr (31) frei in das Loch passt, wobei das Rohr und das Loch keine Befestigungselemente aufweisen, die sicherstellen, dass sie in Position gehalten werden,
- das Rohr (31) mit einer Dichtung (4) ausgestattet ist, die eine fluidische Abdichtung zwischen dem Rohr und dem Loch (22) gewährleistet,
- die Dichtung (4) die Form einer Hülse aufweist, die auf die Außenwand des Rohrs (31) passt,
- der rohrförmige Körper (30) auf dem Wärmetauscher (2₁) mit Hilfe von Organen (5, 25) montiert ist, die dazu konfiguriert sind, ein elastisches Aufstecken des Körpers auf den Wärmetauscher zu bewirken, wobei sich die Organe von der Hülse (4), dem Rohr (31) und dem Loch (22) unterscheiden, wobei die Organe gewährleisten, dass der Körper auf dem Wärmetauscher in Position gehalten wird.

2. Anlage nach Anspruch 1, wobei das elastische Aufstecken mit Hilfe von Rastorganen (5) erfolgt, die am rohrförmigen Körper (30) vorgesehen sind, wobei die Rastorgane mit komplementären Rastorganen (25), die am Wärmetauscher (2₁) vorgesehen sind, zusammenwirken.

3. Anlage nach Anspruch 2, wobei:
- die Rastorgane (5) des rohrförmigen Körpers (30) die Form von flexiblen Laschen (50) aufweisen, die sich von der Außenfläche des Körpers parallel zum Rohr (31) und auf derselben Seite wie das Rohr erstrecken,
- jede Lasche (50) ein fest mit dem rohrförmigen Körper (30) verbundenes Ende und ein mit einem Rastelement (51) ausgestattetes freies Ende umfasst,
- jedes Rastelement (51) mit einem am Wärmetauscher (2₁) angeordneten Rastloch (25) zusammenwirkt.

4. Anlage nach Anspruch 3, wobei der rohrförmige Körper (30) mit zwei Paaren von Laschen (50) ausgestattet ist, wobei die Laschen jedes Paars spiegelbildlich und symmetrisch zur Mittelebene des Körpers angeordnet sind.

5. Anlage nach Anspruch 3, wobei der rohrförmige Körper (30) mit zwei Paaren von Laschen (50) ausgestattet ist, wobei die Laschen jedes Paars spiegelbildlich und symmetrisch zur Sekantenebene des Körpers angeordnet sind.

6. Anlage nach einem der Ansprüche 3 bis 5, wobei jedes Rastloch (25) in einer Rinne (250) angeordnet ist, die in einer Wand (23) des Wärmetauschers (2₁) ausgebildet ist, wobei die Rinnen Führungen für die Laschen (50) bilden, wenn der rohrförmige Körper (30) auf die Wand des Wärmetauschers aufgesteckt wird.

7. Anlage nach einem der vorangehenden Ansprüche, wobei am rohrförmigen Körper (30) eine oder mehrere Nasen (6) angeordnet sind, wobei die Nasen in am Wärmetauscher (2₁) angeordnete komplementäre Aufnahmen (26) eingreifen, wobei die Nasen von den Rastorganen (5) getrennt sind.

8. Anlage nach einem der vorangehenden Ansprüche, wobei am rohrförmigen Körper (30) eine oder mehrere Rippen (7) angeordnet sind, wobei die Rippen in am Wärmetauscher (2₁) angeordnete komplementäre Aufnahmen (27) eingreifen, wobei die Rippen von den Rastorganen (5) getrennt sind.

9. Anlage nach Anspruch 8, wobei die Rippen (7) symmetrisch zur Sekantenebene des rohrförmigen Körpers (30) angeordnet sind.

10. Anlage nach Anspruch 8, wobei die Rippen (7) symmetrisch zur Mittelebene des rohrförmigen Körpers (30) angeordnet sind.

11. Anlage nach einem der vorangehenden Ansprüche, wobei an der Innenwand des rohrförmigen Körpers (30) Krallen oder Noppen (33) angeordnet sind.

12. Anlage nach einem der vorangehenden Ansprüche, wobei:
- die Hülse (4) eine konische Außenwand aufweist,
- das Loch (22) die gleiche Konizität wie die Hülse (4) aufweist, wobei die Innenwand des Lochs an die Außenwand der Hülse angepasst ist.

13. Anlage nach Anspruch 12, wobei die Außenwand der Hülse (4) mit einer oder mehreren von der Außenwand vorstehenden kreisförmigen Wülsten oder Rippen (41) ausgestattet ist.

## Claims

1. Installation comprising:
- a supply pipe (T_{A}) or a discharge pipe (T_{D}) for a cooling fluid,
- at least one hybrid solar panel (P₁), said hybrid solar panel comprising:
- a photovoltaic module (1₁),
- a heat exchanger (2₁) in which a cooling fluid flows,
- a connector (3₁) connecting the heat exchanger (2₁) to the pipe (T_{A}, T_{D}), said connector comprising:
- a tubular body (30) installed around the pipe (T_{A}, T_{D}),
- a tube (31) installed on an external wall of the tubular body (30) which allows fluid communication between the pipe (T_{A}, T_{D}) and the heat exchanger (2₁), which tube and which external wall form a single piece,
And installation wherein:
- the heat exchanger (2₁) has a wall (20) in which a hole (22) is made, the tube (31) nesting freely freely in said hole, said tube and said hole being devoid of fasteners that hold them in position,
- the tube (31) has a seal (4) that makes a fluid seal between said tube and the hole (22),
- the seal (4) taking the form of a sleeve that fits onto the external wall of the tube (31),
- the tubular body (30) is assembled on the heat exchanger (2₁) by means of members (5, 25) configured to elastically nest said body on said heat exchanger, which members are separate from the sleeve (4), the tube (31) and the hole (22), which members hold said body in position on said heat exchanger.

2. Installation according to claim 1, wherein elastic nesting is carried out by means of snap-on members (5) on the tubular body (30), which snap-on members cooperate with complementary snap-on members (25) on the heat exchanger (2₁).

3. Installation according to claim 2, wherein:
- the snap-on members (5) of the tubular body (30) take the form of flexible tabs (50) which extend from the external surface of said body parallel to the tube (31) and on the same side as said tube,
- each tab (50) has an end integral with the tubular body (30) and a free end provided with a snap-on element (51),
- each snap-on element (51) cooperates with a snapping-on hole (25) provided on the heat exchanger (2₁).

4. Installation according to claim 3, wherein the tubular body (30) has two pairs of tabs (50), the tabs of each pair being arranged in a mirror configuration, symmetrically in relation to the median plane of said body.

5. Installation according to claim 3, wherein the tubular body (30) has two pairs of tabs (50), wherein the tabs of each pair are arranged in a mirror configuration, symmetrically in relation to the secant plane of said body.

6. Installation according to any one of claims 3 to 5, wherein each snapping-on hole (25) is made in a channel (250) made in a wall (23) of the heat exchanger (2₁), which channels form guides for the tabs (50)when the tubular body (30) is nested on the wall of said exchanger.

7. Installation according to any one of the preceding claims, wherein one or more lugs (6) are arranged on the tubular body (30), which lugs fit into complementary recesses (26) arranged on the exchanger (2₁), which lugs are separate from the snap-on members (5).

8. Installation according to any one of the preceding claims, wherein one or more ribs (7) are arranged on the tubular body (30), which ribs are inserted in complementary recesses (27) arranged on the exchanger (2₁), which ribs are separate from the snap-on members (5).

9. Installation according to claim 8, wherein the ribs (7) are arranged symmetrically with respect to the secant plane of the tubular body (30).

10. Installation according to claim 8, wherein the ribs (7) are arranged symmetrically with respect to the median plane of the tubular body (30).

11. Installation according to any one of the preceding claims, wherein claws or pins (33) are arranged on the internal wall of the tubular body (30).

12. Installation according to any one of the preceding claims, wherein:
- the sleeve (4) has a tapered external wall,
- the hole (22) has the same taper as the sleeve (4), the internal wall of said hole being designed to fit the external wall of said sleeve.

13. Installation according to claim 12, wherein the external wall of the sleeve (4) has one or more circular beads or ribs (41) projecting from said external wall.
